# EUROPÄISCHE PATENTSCHRIFT

(11) **EP 3 560 738 B1**
(45) Veröffentlichungstag und Bekanntmachung des Hinweises auf die Patenterteilung: **04.12.2024**
(21) Anmeldenummer: 18212521.1
(22) Anmeldetag: 14.12.2018
(51) Int. Cl.: B60H 1/34, F24F 13/14, F24F 13/15

(54) **LUFTAUSSTRÖMER**
AIR VENT
DISPOSITIF D'ÉCOULEMENT D'AIR

(30) Priorität: 25.04.2018 DE 102018109994; 25.04.2018 DE 202018104942 U
(43) Veröffentlichungstag der Anmeldung: 30.10.2019
(73) Patentinhaber: Dr. Schneider Kunststoffwerke GmbH, 96317 Kronach-Neuses (DE)
(72) Erfinder: Campanaro, Roberto, 96052 Bamberg (DE); Ladisa, Domenico, 96328 Küps (DE)
(74) Vertreter: Isarpatent

(56) Entgegenhaltungen:
- WO-A1-2016/075111
- DE-U1- 202012 100 243
- US-A1- 2008 146 139
- US-A1- 2011 319 005

## Beschreibung

Die Erfindung betrifft einen Luftausströmer, der ein Gehäuse mit einem Luftkanal aufweist, in dem ein Dekorelement, mindestens eine erste Lamelle und mindestens eine zweite Lamelle angeordnet sind.

Luftausströmer dienen zum Ausgeben von Luft, die von einer Klimaanlage oder einer anderen Belüftungseinrichtung zugeführt wird. Zusätzlich kann über Luftausströmer eine Ablenkung der ausgegebenen Luft erreicht werden. In Fahrzeugen werden Luftausströmer eingesetzt, um Frischluft, temperierte Luft und/oder klimatisierte Luft in den Fahrgastraum eines Fahrzeugs zu bringen. Fahrzeuge können beispielsweise Kraftfahrzeuge wie Pkw, Lkw oder Busse, Züge, Flugzeuge oder Schiffe sein.

Bei Luftausströmern kann oftmals neben der Steuerung der Ablenkung von ausgegebener Luft auch die Menge an ausgegebener Luft geregelt werden. Hierzu kann eine Drosseleinrichtung vorgesehen sein. Die Drosseleinrichtung kann über eine Steuereinrichtung die Menge der zugeführten Luft regeln, wobei die Steuereinrichtung mit einer Bedieneinrichtung zum Ablenken des Luftstroms oder getrennt von einer solchen Bedieneinrichtung angeordnet bzw. gekoppelt sein kann. Eine derartige Bedieneinrichtung kann beispielsweise im Bereich einer Ausströmöffnung vorgesehen sein.

Luftausströmer in Kraftfahrzeugen können an verschiedenen Positionen angeordnet sein. Beispielsweise befinden sich Luftausströmer in Kraftfahrzeugen im Bereich eines Fahrzeugarmaturenbretts oder im Bereich der A-, B- oder C-Säule sowie am Dach oder an anderen Stellen.

### Stand der Technik

Aus dem Stand der Technik sind Luftausströmer mit einer sehr geringen Ausströmhöhe gegenüber ihrer Ausströmbreite (und umgekehrt) bekannt. Die Luftausströmer werden auch als Fugenausströmer bezeichnet. Solche Luftausströmer weisen beispielsweise Ei-förmige Luftleitelemente auf, die starr in einem Luftkanalabschnitt, d. h. nicht beweglich, angeordnet sind, wobei zwischen dem Luftleitelement und den gegenüberliegenden Wandabschnitten Luftkanäle ausgebildet werden. Diesen Luftkanälen kann wechselweise oder gemeinsam Luft zugeführt werden, wobei das Zuführen von Luft in einen der Bereiche über einen Flügel erfolgt, der an der Rückseite des Luftleitelements verschwenkbar gelagert ist.

Ein solcher Luftausströmer wird beispielsweise in DE 10 2013 210 055 B3 beschrieben. Zusätzlich weist dieser Luftausströmer Lamellen auf, die in Luftströmungsrichtung dem Flügel vorgelagert und beabstandet zu diesem angeordnet sind. Diese Flügel befinden sich zudem in einem Abschnitt des Luftkanals, der getrennt von dem Abschnitt des Luftkanals ist, in welchem die Luftablenkung über den Flügel und das Luftleitelement erfolgt.

Der Luftausströmer weist verschiedene Nachteile auf. Zum einen ist die seitliche Luftablenkung über die in Luftströmungsrichtung beabstandet und vorgelagerten Lamellen unzureichend. Die ausgegebene Luft kann über die Lamellen nur in einem sehr geringen Umfang seitlich abgelenkt werden.

Weiterhin ergeben sich bei dem Luftausströmer von DE 10 2013 210 055 B3 in maximal verschwenkten Stellungen des Flügels hohe Druckunterschiede im Vergleich zu einer Neutralstellung des Flügels. In den maximal verschwenkten Stellungen des Flügels kann es daher zu einer Geräuschentwicklung kommen.

Die unterschiedlichen Druckverhältnisse in den verschiedenen Stellungen des Flügels verschlechtern zudem die seitliche Luftablenkung. Je stärker die Drosselung der in einen der beiden Teilluftkanäle geleiteten Luftströme ist, desto geringer wirkt sich eine seitliche Luftablenkung über die in Luftströmungsrichtung den Flügel vorgelagerten Lamellen aus.

Das Luftleitelement und der Flügel des Luftausströmers von DE 10 2013 210 055 B3 sind in sämtlichen offenbarten Ausführungen und in der beanspruchten Ausführungsform als Luftleitelement ausgebildet, dass aus zwei Komponenten, nämlich dem starren Luftleitelement und dem an der Rückseite beweglich angeordneten Flügel, gebildet. Die Ausbildung eines solchen, langgestreckten Luftleitelements mit einer beweglichen Rückseite weist jedoch, wie vorstehend dargelegt, eine Vielzahl an Nachteilen auf.

Die DE 102 02 926 A1 offenbart eine Luftdüse mit einem verschwenkbar gelagerten Leitelement. Das Leitelement dient zur Luftablenkung und ist in einem Abschnitt mit gekrümmten Seitenwänden gelagert. Zur Steuerung der Luftablenkung ist ein Stellelement mit dem Leitelement gekoppelt, so dass ein gegensinniges Verschwenken des Leitelements beim Verschwenken des Stellelements erfolgt. Im Zusammenspiel mit den gekrümmten Seitenwänden kann bspw. durch ein Verschwenken des Stellelements nach unten ein nach unten gerichteter Luftstrom erzeugt werden.

Die US 2008 0 146 139 A1, WO 2016 / 075 111 A1, DE 20 2012 100 243 U1 und US 2011 0 319 005 A1 offenbaren jeweils einen Luftausströmer, der im Bereich der Luftaustrittsöffnung mindestens eine erste Lamelle und dahinter quer dazu angeordnete zweite Lamellen aufweist. Ein Betätigungselement ermöglicht die Verstellung der ersten und zweiten Lamellen, um die Richtung des aus dem Ausströmer austretenden Luftstroms zu beeinflussen. Zudem kann im Bereich des Lufteinlasses des Ausströmers eine Drosseleinrichtung vorgesehen sein, die es erlaubt, den in den Ausströmer eingeleiteten Luftstrom zu regulieren.

### Aufgabe

Demgegenüber besteht die Aufgabe der Erfindung darin, einen Luftausströmer anzugeben, der einen gegenüber dem Stand der Technik sehr einfachen Aufbau aufweist, die Probleme des Stands der Technik behebt und eine alternative Lösung zu den aus dem Stand der Technik bekannten Luftausströmer darstellt.

### Lösung

Die vorstehend genannte Aufgabe wird erfindungsgemäß durch einen Luftausströmer gemäß dem unabhängigen Anspruch 1 gelöst. Der Luftausströmer aufweisend ein Gehäuse mit einem Luftkanal, in dem ein Dekorelement, mindestens eine erste Lamelle und mindestens eine zweite Lamelle angeordnet sind, wobei
- das Dekorelement in einem einer Luftaustrittsöffnung zugewandten Abschnitt des Luftkanals angeordnet ist,
- die mindestens eine erste Lamelle in Luftströmungsrichtung dem Dekorelement vorgelagert im Luftkanal angeordnet ist,
- die mindestens eine zweite Lamelle in Luftströmungsrichtung der mindestens einen ersten Lamellen vorgelagert in einem, einer Lufteintrittsöffnung zugewandten Abschnitt des Luftkanals angeordnet ist,
- die mindestens eine erste Lamelle und die mindestens eine zweite Lamelle verschwenkbar am und/oder im Gehäuse gelagert sind,
- mittels der mindestens einen zweiten Lamelle die Menge an zugeführter Luft in einen ersten Bereich und in einen zweiten Bereich der mindestens einen ersten Lamelle regelbar ist,
- die mindestens eine erste Lamelle im Wesentlichen orthogonal zur Schwenkachse der mindestens einen zweiten Lamelle und im Wesentlichen orthogonal zu einer Längsachse des Dekorelements verschwenkbar gelagert ist, und
- das Dekorelement und die mindestens eine erste Lamelle in einem ersten Abschnitt des Luftkanals und die mindestens eine zweite Lamelle in einem zweiten Abschnitt des Luftkanals angeordnet sind, wobei der erste Abschnitt dem Dekorelement gegenüberliegende gekrümmte Wandabschnitte und der zweite Abschnitt einen gegenüber dem ersten Abschnitt geringeren Strömungsquerschnitt aufweist.

Die Anordnung ermöglicht eine gegenüber dem Stand der Technik verbesserte seitliche Luftablenkung, da die Luftablenkung näher am Bereich der Luftaustrittsöffnung erfolgt. Die zweite Lamelle, die dazu vorgesehen ist über die Lufteintrittsöffnung einströmende Luft in den ersten und den zweiten Bereich der mindestens einen ersten Lamelle zu leiten, ist der mindestens einen ersten Lamelle in Luftströmungsrichtung vorgelagert und befindet sich im Bereich einer Lufteintrittsöffnung für den Luftkanal. Über die zweite Lamelle in einem hinteren Abschnitt des Luftkanals erfolgt die Luftablenkung in einem vorderen, der Luftaustrittsöffnung zugewandten Abschnitt über die Ausbildung der Wandabschnitte im Gehäuse.

In weiteren Ausführungen mit einem verlagerbaren Dekorelement, welches dann als Luftleitelement dient, kann im Zusammenspiel mit den Wandabschnitten eine Luftablenkung über das Luftleitelement erfolgen. Vor allem bei Luftausströmern mit einer sehr geringen Luftausströmhöhe gegenüber einer Luftausströmbreite (sogenannte Fugenausströmer) ist die Luftablenkung über die zweite Lamelle auch dann ausreichend und kann im gleichen Maße bereitgestellt werden, wie beispielsweise im Stand der Technik, wenn die dafür erforderliche Einrichtung (zweite Lamelle) zum Ablenken des eintretenden Luftstroms deutlich beabstandet zu dem Dekorelement oder einem Luftleitelement angeordnet ist. Einströmende Luft wird zuerst über die zweite Lamelle entsprechend der Stellung der zweiten Lamelle in einen ersten und/oder zweiten Bereich der mindestens einen ersten Lamelle geleitet. Hierbei erfolgt eine erste Luftablenkung, beispielsweise nach oben und unten. Die Luft wird anschließend in Abhängigkeit der Zufuhr zu den beiden Bereichen der mindestens einen erstem Lamelle seitlich abgelenkt. Da die seitliche Ablenkung in einem vorderen, der Luftaustrittsöffnung zugewandten Abschnitt des Luftkanals erfolgt, bleibt diese aufrechterhalten und wird nicht durch eine zusätzliche weitere Luftablenkung über die Krümmung der gegenüberliegenden Seitenwände geschwächt.

Das Dekorelement erstreckt sich in Längsrichtung der Luftaustrittsöffnung und kann nur dann als Luftleitelement dienen, wenn das Dekorelement verlagert wird (z.B. als zusätzliche Lamelle). Es erfolgt auch keine Luftablenkung über das Dekorelement, wenn dieses als Walze oder Zylinder ausgebildet ist, da der Abstand zu den Gehäusewänden durch ein Verdrehen des Dekorelements nicht verändert wird. Bei der hierin beschriebenen technischen Lehre wird die Luftablenkung durch die mindestens eine zweite Lamelle geregelt, welche die Zufuhr in die verschiedenen Bereiche der mindestens einen ersten Lamelle vorgibt. Die Luft strömt dann entlang der gegenüberliegenden Wandabschnitte und erfährt bspw. eine Ablenkung nach unten, wenn der Luftstrom in einem unteren Bereich des Luftkanals geringer ist. Dabei ist der Luftstrom im oberen Bereich größer, so dass der größere Luftstrom durch Überlagerung der ausgegeben Teilluftströme die Richtung der ausgegebenen Luft bestimmt. Versuche haben gezeigt, dass die Luftablenkung auf der Ausbildung der gegenüberliegenden Wandabschnitte beruht, wobei die gegenüberliegenden Wandabschnitte parallel zum Dekorelement und parallel zur Schwenkachse der zweiten Lamelle verlaufen. Das Dekorelement hat daher keine Auswirkung auf die Luftablenkung und kann deswegen auch technisch nicht als Luftleitelement verstanden werden, da keine Luftablenkung und keine "Luftleitung" hierüber erfolgt. Ist demgegenüber das Dekorelement als weitere Lamelle ausgebildet und verschwenkbar in gegenüberliegenden Gehäusewänden des Gehäuses gelagert, so kann von einem Luftleitelement gesprochen werden. In Ausführungen mit einem starr angeordneten Dekorelement ist dies jedoch nicht zutreffend.

Das Dekorelement kann weiterhin dazu dienen, einen Kopplungsbereich mehrerer erster Lamellen zu verdecken und als Lager für ein Bedienelement, welches verschwenkbar und/oder verschiebbar gelagert ist, vorgesehen sein.

Das Dekorelement kann verschiedene Querschnittsformen aufweisen und erstreckt sich über die größere Weite der Luftaustrittsöffnung. Dabei ist das Dekorelement im Wesentlichen so angeordnet, dass dieses sich mittig über die Luftaustrittsöffnung erstreckt.

Der hierin beschriebe Luftausströmer stellt daher ein anderes Konzept dar, als beispielsweise in DE 10 2013 210 055 B3 beschrieben. Die im Stand der Technik bekannte Ausführung offenbart ein im Wesentlichen langgestrecktes Luftleitelement, bestehend aus einem starr angeordneten Luftleitelement und einem daran beweglich angeordneten Flügel. Eine seitliche Luftablenkung ist bei diesem System grundsätzlich nur sehr schwach möglich, da zum Einen ein weiter Strömungsweg der bereits seitlich abgelenkten Luft über das Luftleitelement hinweg vorhanden ist und andererseits die seitlich abgelenkte Luft zusätzlich der Luftablenkung über den Flügel untergeordnet ist, wobei die Luftablenkung über den Flügel nach der seitlichen Luftablenkung erfolgt.

Anstelle einer einzelnen zweiten Lamelle können in weiteren Ausführungen auch mehrere zweite Lamelle verschwenkbar am oder im Gehäuse gelagert sein, die eine Luftablenkung orthogonal zur Luftablenkung über die mindestens eine erste Lamelle bewirken. So kann die zweite Lamelle auch aus mindestens zwei miteinander verbundenen Teillamellen oder Abschnitten gebildet sein. Eine Verbindung kann bspw. über ein Filmscharnier oder ein Schwenklager erfolgen. In noch weiteren Ausführungen kann die mindestens eine zweite Lamelle auch als sogenannte Flexlamelle ausgebildet sein. Flexlamellen sind verformbar und können hierzu aus einem flexiblen Material bestehen. Über eine Einrichtung kann dann zur Luftablenkung eine Verformung der Flexlamelle erfolgen.

Im Weiteren kann der Luftausströmer auch eine Drosseleinrichtung aufweisen, die zur Regulierung der Menge an zugeführter Luft dient. Die Drosseleinrichtung kann zwei schalenartige Elemente aufweisen, die zueinander verschwenkbar gelagert sind, so dass ein Verschließen des Luftkanals durch ein aufeinander zu bewegen erfolgt. Dies hat den Vorteil, dass die Drosseleinrichtung selbst keine Luftablenkung bei gedrosselten Zuständen bewirkt.

Das Gehäuse des Luftausströmers kann im Bereich der Luftaustrittsöffnung abgerundete Luftaustrittskanten aufweisen, die derart ausgebildet sind, dass unter Ausnutzung des Coanda-Effekts eine Luftstromaufweitung erreichbar ist und die Luftablenkung unterstützt wird. Die Luftablenkung orthogonal zu der mindestens einen ersten Lamelle wird dadurch zusätzlich verbessert.

Weiterhin kann das Dekorelement an seinem der Lufteintrittsöffnung und/oder an seinem der Luftaustrittsöffnung zugewandten Ende derart gekrümmt ausgebildet sein, dass unter Ausnutzung des Coanda-Effekts eine Luftstromaufweitung erreichbar ist. Hierbei kann bei Ausführungen mit einem Luftleitelement auch die Luftablenkung zusätzlich unterstützt werden.

In weiteren Ausführungsformen kann das Dekorelement in Luftströmungsrichtung verschiebbar gelagert sein und dann auch als Luftleitelement dienen. Dadurch wird die Möglichkeit geschaffen, einen diffusen oder spotlastigen Luftstrom bereitzustellen. In einer ersten Stellung kann ein diffuser Luftstrom bereitgestellt werden, wobei sich das Luftleitelement in einem ersten Abstand zu der Luftaustrittsöffnung oder den Wandabschnitten des Luftkanals in diesem Bereich befindet. In dieser Position des Luftleitelements kann ein diffuser Luftstrom ausgegeben werden, wobei beispielsweise über abgerundete Luftaustrittskanten die Aufweitung des Luftstroms zur Bereitstellung des diffusen Luftstroms unterstützt wird. Weist das Luftleitelement durch ein Verschieben einen zweiten Abstand zu der Luftaustrittsöffnung bzw. den Wandabschnitten des Luftkanals in diesem Bereich auf, so kann ein spotlastiger Luftstrom bereitgestellt werden, wobei die ausströmende Luft anders als beim ersten Abstand des Luftleitelements zu der Luftaustrittsöffnung gebündelt wird. Die ausgegebene Luft trifft dabei auf verschiedene Bereiche des Luftleitelements. Der ausgegebene Luftstrom wird dann entsprechend unterschiedlich ausgegeben, wenn das Luftleitelement unterschiedlich ausgebildete Bereiche aufweist.

Die verschiebliche Lagerung des Luftleitelements stellt dabei eine zusätzliche Steuerungsmöglichkeit für den ausgegebenen Luftstrom bereit. Der Abstand des Luftleitelements ermöglicht es den Strömungsquerschnitt im Bereich der Luftaustrittsöffnung zwischen dem Luftleitelement und dem Gehäuse entsprechend so zu verändern, dass ein diffuser Luftstrom oder ein spotlastiger Luftstrom bereitgestellt wird.

Das Dekorelement kann entweder starr im Gehäuse des Luftausströmers angeordnet oder bewegbar, beispielsweise verschiebbar oder verschwenkbar, im Gehäuse gelagert sein und dann als Luftleitelement fungieren. Ein Luftleitelement kann derart verschwenkbar im Gehäuse gelagert sein, dass der Strömungsquerschnitt zwischen dem Luftleitelement und den gegenüberliegenden Wandabschnitten des Luftkanals, analog zu einem Verschieben des Luftleitelements, durch ein Verschwenken des Luftleitelements veränderbar ist. Die Luftablenkung orthogonal zu der mindestens einen ersten Lamelle wird hierdurch zusätzlich verbessert. Ein verschwenkbares Luftleitelement unterstützt die Luftablenkung, da die Luftleitfläche, entlang welcher ein Hauptluftstrom entlang strömen kann, sich in die Richtung erstreckt, welche zur Luftablenkung durch ein Verschwenken des Luftleitelements ausgewählt wurde.

Bei dem Luftausströmer stellen sich im Luftaustrittsbereich zwei Teilluftströme ein, die aufeinander treffen können. In Abhängigkeit der Stellung der zweiten Lamelle erfolgt daher eine Luftablenkung, beispielsweise nach oben oder unten, die sich nach Maßgabe der in die entsprechenden Bereiche zwischen dem Dekorelement und den gegenüberliegenden Wandabschnitten geleiteten Luft einstellt.

Die Anordnung mit einer zweiten Lamelle, die der mindestens einen ersten Lamelle in Luftströmungsrichtung vorgelagert ist, bietet gegenüber bekannten Ausführungen aus dem Stand der Technik zudem den Vorteil, dass es zu keiner Geräuschentwicklung durch Druckverluste kommt, da einströmende Luft aufgrund der Anordnung der mindestens einen ersten Lamelle in Luftströmungsrichtung vor dem Dekorelement eine Luftverteilung auch in einen Bereich des Luftkanals zulässt, der bei einer direkten Anordnung der zweiten Lamelle am Dekorelement verschlossen werden würde. Die mindestens eine erste Lamelle stellt daher sicher, dass in sämtlichen Stellungen der zweiten Lamelle Luft zwischen das Dekorelement und den gegenüberliegenden Wandabschnitt gelangen kann. Die dazwischen einströmende Luft weist jedoch in den maximal verschwenkten Stellungen der zweiten Lamelle nur einen geringen Anteil am Gesamtluftstrom auf und bewirkt deshalb keine zusätzliche Luftablenkung.

Das Dekorelement kann zusätzlich eine Querschnittsform mit gekrümmten Abschnitten aufweisen, die so ausgebildet sind, dass eine dauerhafte Luftstromaufweitung erreichbar ist. Hierzu weist das Dekorelement entsprechend gekrümmte Abschnitte auf.

Darüber hinaus kann der Luftausströmer ein Bedienelement aufweisen, das an- und/oder in dem Dekorelement beweglich gelagert und mit der mindestens einen ersten Lamelle und/oder der zweiten Lamelle gekoppelt ist. Bei Ausführungen mit einem verschwenkbar gelagerten Luftleitelement kann dieses bei einem Verschwenken ein gegenläufiges Verschwenken der zweiten Lamelle bewirken. Hierzu können beispielsweise Zahnradabschnitte vorgesehen sein, wobei ein erster Zahnradabschnitt am Luftleitelement und ein zweiter Zahnradabschnitt an der zweiten Lamelle angeordnet oder mit diesen gekoppelt sind, und die Zahnradabschnitte miteinander in Eingriff stehen. Zusätzlich kann ein Bedienelement vorgesehen sein, das lediglich auf die zweite Lamelle einwirkt, wenn das Dekorelement starr angeordnet oder in Luftströmungsrichtung verschiebbar gelagert ist. Über ein Bedienelement kann auch ein Verschwenken der mindestens einen ersten Lamelle erfolgen. Hierzu kann das Bedienelement an einem starr oder beweglich angeordneten Dekorelement in Längsrichtung des Dekorelements verschiebbar gelagert sein. Über eine Koppeleinrichtung wird dann das Verschwenken der mindestens einen ersten Lamelle erreicht.

Der Luftausströmer kann mehrere erste Lamellen aufweisen, wobei die zweite Lamelle mehrere Koppelabschnitte aufweist, über welche die ersten Lamellen mit der zweiten Lamelle verbunden sind. Die zweite Lamelle kann in dieser Ausführungsform zusätzlich zu ihrer Luftleitfunktion als Mitnehmer zum Verschwenken der ersten Lamellen dienen. Die Ausbildung des Luftausströmers wird hierüber weiter vereinfacht.

Der Luftausströmer kann darüber hinaus mehrere erste Lamellen aufweisen, wobei die ersten Lamellen an ihrer der Luftaustrittsöffnung zugewandten Vorderseite eine Aussparung aufweisen und das Dekorelement rückseitig mindestens abschnittsweise umgeben. Die Abschnitte der ersten Lamellen, welche das Dekorelement mindestens abschnittsweise umgeben, befinden sich im ersten Bereich und im zweiten Bereich der ersten Lamelle. Die seitliche Luftablenkung über die ersten Lamellen wird hierdurch weiter verbessert, da die ersten Lamellen weiter in Richtung der Luftaustrittsöffnung gerichtet sind.

Erfindungsgemäß kann der gesamte Strömungsquerschnitt des Luftkanals über die mindestens eine zweite Lamelle verändert werden. Der Strömungsquerschnitt in einer Neutralstellung der mindestens einen zweiten Lamelle entspricht im ersten Abschnitt dem Strömungsquerschnitt im zweiten Abschnitt. Hierdurch wird die Luftablenkung weiter verbessert. Zusätzlich kann sich das Dekorelement in einem mittleren Abschnitt befinden. Die Luftablenkung über entsprechend ausgebildete Wandabschnitte, die eine Krümmung aufweisen, wird bei einem mittigen Dekorelement ebenfalls verbessert. Die mindestens eine erste Lamelle ist in einem Abschnitt angeordnet, der sich erfindungsgemäß im Übergang von dem ersten Abschnitt zu dem zweiten Abschnitt befindet.

In weiteren Ausführungsformen können der Strömungsquerschnitt des Luftkanals und/oder der Strömungsquerschnitt des Dekorelements derart ausgebildet sein, dass die Querschnittsfläche im Abschnitt des Luftkanals aufgrund des Dekorelements um maximal 20 % kleiner ist als die Querschnittsfläche des Luftkanals in dem dahinter befindlichen zweiten Abschnitt.

In weiteren Ausführungsformen kann der Luftausströmer beleuchtbar sein. Hierzu können Bestandteile des Luftausströmers aus einem mindestens partiell durchleuchtbaren Kunststoff bestehen und beispielsweise eine Lackierung aufweisen, die nur einen Bereich zur Beleuchtung frei lässt. In weiteren Ausführungsformen können auch lichtdurchlässige Kunststoffe eingebracht sein. Die Beleuchtung kann über Lichtleiter und/oder Leuchtelemente, wie beispielsweise Leuchtdioden erfolgen. Zudem kann die Beleuchtung derart gesteuert werden, dass in Abhängigkeit der Temperatur der ausströmenden Luft und der Luftmenge die Beleuchtung verändert wird. Auch eine Änderung der Beleuchtung in Bezug auf Wetter, Licht und Tagesverhältnisse kann vorgesehen sein.

Die Komponenten des Luftausströmers können aus einem Kunststoff bestehen und sind daher in hoher Stückzahl kostengünstig in einem Spritzgussprozess herstellbar.

Der Luftausströmer weist mehrere Vorteile gegenüber bekannten Ausführungen auf, da eine verbesserte seitliche Luftablenkung erreicht wird und Geräusche durch vollständiges Abschließen von Teilluftkanälen verhindert wird.

Weitere Merkmale, Vorteile sowie Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine schematische Darstellung eines Luftausströmers einer ersten Ausführungsform;
- Fig. 2: eine schematische Darstellung des Luftausströmers von Fig. 1 in einer verschwenkten Stellung;
- Fig. 3: eine schematische Darstellung des Luftausströmers von Fig. 1 in einer weiteren verschwenkten Stellung;
- Fig. 4: eine schematische Darstellung eines Luftausströmers einer zweiten Ausführungsform; und
- Fig. 5: eine perspektivische Darstellung von Komponenten eines Luftausströmers einer dritten Ausführungsform.

In den Zeichnungen mit gleichen Bezugszeichen versehene Komponenten entsprechen im Wesentlichen einander, sofern nichts anderes angegeben ist. Darüber hinaus wird darauf verzichtet Bestanteile zu zeigen und zu beschreiben, welche nicht wesentlich zum Verständnis der hierin offenbarten technischen Lehre sind.

### Ausführliche Beschreibung von Ausführungsbeispielen

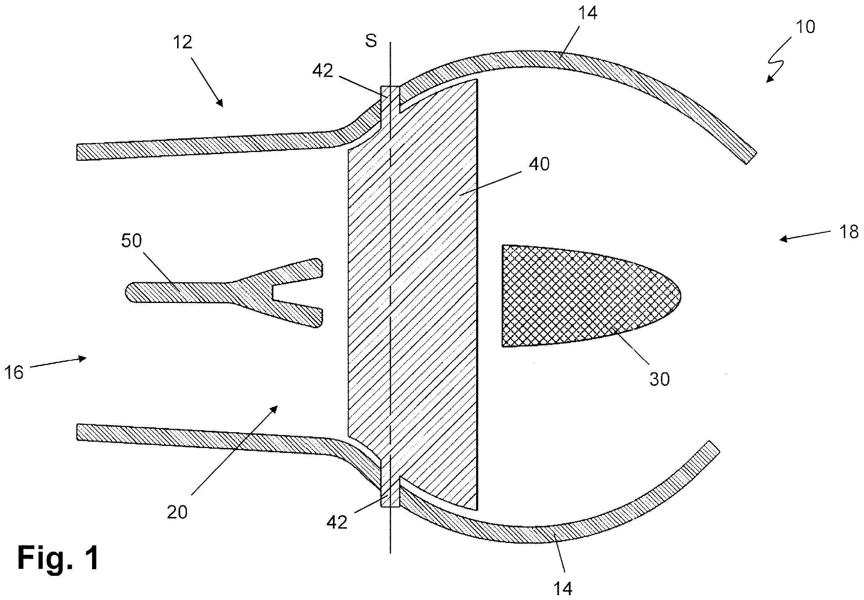

Die **Fig. 1 bis 3** zeigen verschiedene Ausführungen eines Luftausströmers 10. Solche Luftausströmer 10 können beispielsweise in einem Armaturenbrett eines Fahrzeugs angeordnet sein. Die Luftausströmer 10 sind als Fugenausströmer ausgebildet und weisen daher eine geringe Ausströmhöhe bei einer großen Ausströmbreite auf. Die Fugenausströmer können jedoch auch so angeordnet werden, dass sich die größere Erstreckung der Luftaustrittsöffnung nach im Wesentlichen vertikal oder schräg verlaufend erstreckt.

Die Luftausströmer 10 der ersten bis dritten Ausführungsform bestehen aus Kunststoff. Diese sind daher in einem Spritzgussprozess in hoher Stückzahl kostengünstig herstellbar. Die Ausgestaltung der Luftausströmer 10 aus Kunststoff bezieht sich auch auf deren Komponenten, wie beispielsweise ein Luftleitelement 30, eine erste Lamelle 40, eine zweite Lamelle 50, das Gehäuse 12 und ein Bedienelement 60 sowie eine Welle 70.

**Fig. 1** zeigt eine schematische Darstellung eines Luftausströmers 10 einer ersten Ausführungsform. Der Luftausströmer 10 weist ein Gehäuse 12 auf. Das Gehäuse 12 gliedert sich in einen ersten Abschnitt und einen zweiten Abschnitt, wobei der erste Abschnitt gegenüberliegende gekrümmte Wandabschnitte 14 aufweist und im zweiten Abschnitt die zweite Lamelle 50 verschwenkbar gelagert ist. Im ersten Abschnitt sind erste Lamellen 40 und ein Luftleitelement 30 verschwenkbar gelagert. Bei dem Luftleitelement 30 handelt es sich um ein verschwenkbares Dekorelement, so dass dieses nachfolgend als Luftleitelement 30 bezeichnet wird.

Das Gehäuse 12 weist eine Lufteintrittsöffnung 16 im zweiten Abschnitt und eine Luftaustrittsöffnung 18 im ersten Abschnitt auf. Zwischen der Lufteintrittsöffnung 16 und der Luftaustrittsöffnung 18 ist ein Luftkanal 20 definiert, durch den einströmende Luft über die Lufteintrittsöffnung 16 durch den Luftausströmer 10 geführt wird. Das Gehäuse 12 weist im zweiten Abschnitt im Bereich der Lufteintrittsöffnung 16 eine Verbindung zu einer Belüftungseinrichtung wie beispielsweise einer Klimaanlage auf. Über die Klimaanlage wird klimatisierte Luft dem Luftausströmer 10 zugeführt. Durch ein Verschwenken der zweiten Lamelle 50 und des Luftleitelementes 30 sowie der ersten Lamellen 40 kann eine Luftablenkung der über die Luftaustrittsöffnung 18 ausgegebenen Luft erreicht werden.

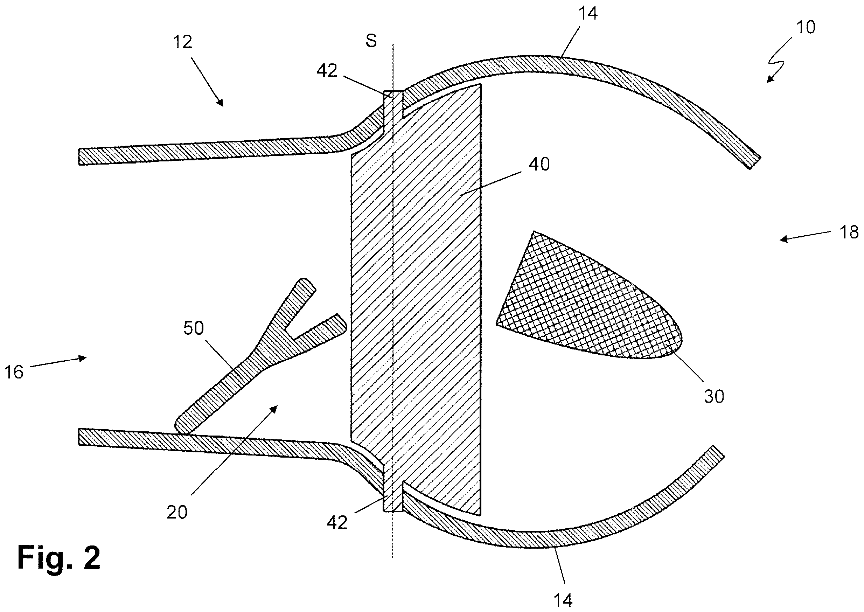

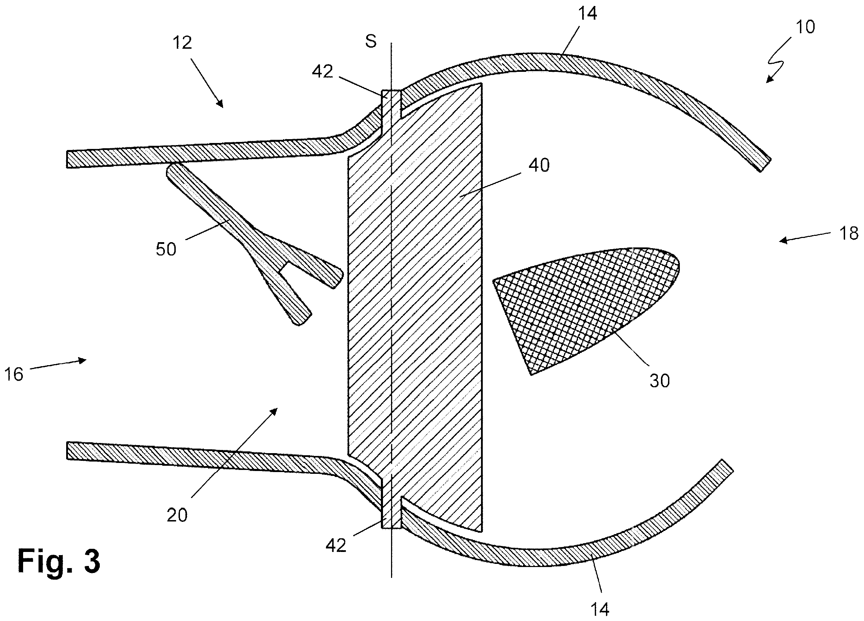

Im Bereich der Luftaustrittsöffnung 18 erstreckt sich der obere Wandabschnitt 14 weiter nach vorne als der darunter befindliche Wandabschnitt 14. Die Ausbildung der Wandabschnitte 14 im Bereich der Luftaustrittsöffnung 18 hängt vom jeweiligen Einsatzgebiet und/oder der Designvorgaben und/oder der zu erreichenden Luftablenkung ab. Die Wandabschnitte 14 sind gekrümmt ausgebildet, sodass dadurch eine Luftablenkung erreicht wird. Bei der in **Fig. 1** gezeigten Neutralstellung wird ein über die Lufteintrittsöffnung 16 zugeführter Luftstrom nicht abgelenkt und strömt im wesentlich geradlinig aus der Luftaustrittsöffnung 18 aus. Hierbei können sich die beiden Teilluftströme, die sich zwischen den Wandabschnitten 14 und dem Luftleitelement 30 einstellen, im Bereich der Luftaustrittsöffnung 18 treffen, wodurch der geradlinige Luftaustrittsstrom gebildet wird. Bei verschwenkten Stellungen des Luftleitelementes 30 und der zweiten Lamelle 50 wird einer der Teilluftströme größer, sodass dieser die Luftablenkung dominiert und damit die Luftablenkung nach oben und unten (siehe Fig. 2 und 3) bewirkt.

Die zweite Lamelle 50 weist an ihrem der Luftaustrittsöffnung 18 zugewandten Ende einen im Wesentlichen v-förmigen Abschnitt auf. Dieser dient zur Zuführung der über die Lufteintrittsöffnung 16 einströmenden Luft in einen ersten Bereich der ersten Lamelle 40 und einen zweiten Bereich der ersten Lamelle 40. Die zweite Lamelle 50 dient der Zuführung des Luftstroms in die entsprechenden Bereiche der ersten Lamellen 40.

Die zweiten Lamellen 40 weisen bei dem in **Fig. 1** gezeigten ersten Ausführungsbeispiel eine Kontur auf, die der Krümmung der Wandabschnitte 14 entsprechend ausgebildet ist. Die ersten Lamellen 40 weisen zudem Lagerzapfen 42 auf, über welche die ersten Lamellen 40 im Gehäuse 12 des Luftausströmers 10 gelagert sind. Die Lagerung der zweiten Lamelle 50 ist in Fig. 1 nicht dargestellt. Die zweite Lamelle 50 ist jedoch ebenfalls in gegenüberliegenden Seitenwänden des Gehäuses 12 verschwenkbar gelagert und mit dem Luftleitelement 30 gekoppelt. Das Luftleitelement 30 ist ebenfalls über nicht dargestellte Lager in den gegenüberliegenden Gehäusewänden des Gehäuses 12 verschwenkbar gelagert. Das Luftleitelement 30 weist an der Vorderseite und in einem mittleren Bereich eine gekrümmte Form auf. Die der Luftaustrittsöffnung 18 zugewandte Fläche weist einen im Wesentlichen parabelförmigen Querschnitt auf. Die Ausgestaltung der Luftleitelementes 30 kann die Luftablenkung unterstützen, insbesondere in den verschwenkten Stellungen.

Für eine Luftablenkung sind das Luftleitelement 30 und die zweite Lamelle 50 verschwenkbar in den gegenüberliegenden Gehäusewänden des Luftausströmers 10 gelagert. Die ersten Lamellen 40 sind um Schwenkachsen S in den gegenüberliegenden Wandabschnitten 14 des Gehäuses 12 verschwenkbar gelagert.

**Fig. 2** zeigt eine schematische Darstellung des Luftausströmers 10 von **Fig. 1** in einer ersten verschwenkten Stellung. In der gezeigten Stellung erfolgt eine Luftablenkung nach unten. Dies wird dadurch erreicht, dass über die Lufteintrittsöffnung 16 einströmende Luft durch die zweite Lamelle 50 in einen oberen Bereich der ersten Lamellen 40 geführt wird. Die Aufteilung des Luftstromes erfolgt daher im zweiten Abschnitt des Gehäuses 12. Anschließend gelangt die einströmende Luft in den oberen Bereich der ersten Lamellen 40 und wird über die ersten Lamellen 40 seitlich, das heißt orthogonal zur zweiten Lamelle 50 abgelenkt. Da die Ablenkung über die ersten Lamellen 40 nach der Zuführung des Luftstromes in den oberen oder entsprechend unteren Bereich der Lamellen 40 erfolgt, wird die seitliche Luftablenkung über die ersten Lamellen 40 im Bereich der Luftaustrittsöffnung 18 nicht geschwächt. Nachdem die einströmende Luft zusätzlich über die ersten Lamellen 40 abgelenkt wurde oder den oberen Bereich der ersten Lamellen 40 ohne seitliche Ablenkung durchströmt hat, wird die Luft über die Krümmung der Wandabschnitte 14, bei Fig. 2 des oberen Wandabschnitts 14, derart abgelenkt, dass der Luftstrom nach unten ausgegeben wird. Hierfür wurde das Luftleitelement 30 nach unten verschwenkt, sodass eine intuitive Steuerung für einen Benutzer bereitgestellt wird. Das Verschwenken des Luftleitelementes 30 unterstützt zudem die Luftablenkung nach unten, da die Oberfläche des Luftleitelementes 30, welcher der Hauptströmungsrichtung zugewandt ist, ebenfalls in der Hauptströmungsrichtung verläuft.

Neben der verbesserten seitlichen Luftablenkung über die zweiten Lamellen 40 wird über den Abstand zwischen der zweiten Lamelle 50 und dem Luftleitelement 30 erreicht, dass auch in der in Fig. 2 gezeigten Maximalstellung, wobei die zweite Lamelle 50 direkt an einer Gehäusewand des Luftausströmers 10 anliegt, keine störenden Geräusche durch starke Druckunterschiede aufgrund eines teilweisen Versperrens des Luftkanals 20 auftreten. Es wird dadurch erreicht, dass einströmende Luft zwischen der zweiten Lamelle 50 und dem Luftleitelement 30 hindurch in den unteren Bereich des ersten Abschnitts gelangen kann. Die Menge an einströmender Luft in den unteren Bereich ist zwar deutlich geringer und bewirkt daher keine Beeinflussung der Luftablenkung, verhindert aber zu starke Druckunterschiede in den verschiedenen Stellungen der Komponenten und beugt damit der Geräuschbildung vor. Ein Ausströmen im unteren Bereich im Bereich der Luftaustrittsöffnung 18 kann toleriert werden, da hierüber keine maßgebliche Beeinflussung des Luftaustritts und der Luftablenkung nach unten erreicht wird.

**Fig. 3** zeigt eine schematische Darstellung des Luftausströmers 10 von **Fig. 1** in einer weiteren verschwenkten Stellung, wobei das Luftleitelement 30 nach oben verschwenkt worden ist und über die Kopplung mit der zweiten Lamelle 50 diese ebenfalls nach oben in ihre Maximalstellung verbracht wurde. Dementsprechend erfolgt eine Luftablenkung nach oben, wobei einströmende Luft im Wesentlichen in den unteren Bereich des Luftkanals 20 im ersten Abschnitt geführt wird und aufgrund der Krümmung des unteren Abschnitts 14 nach oben geführt wird. Zusätzlich kann ein geringer Teilluftstrom in den oberen Bereich des ersten Abschnitts gelangen, sodass es zu keiner Geräuschbildung kommt, da starke Druckunterschiede in den verschiedenen Stellungen der zweiten Lamelle 50 und dem Luftleitelement 30 verhindert werden.

Über die ersten Lamellen 40 kann zusätzlich eine seitliche Luftablenkung erreicht werden.

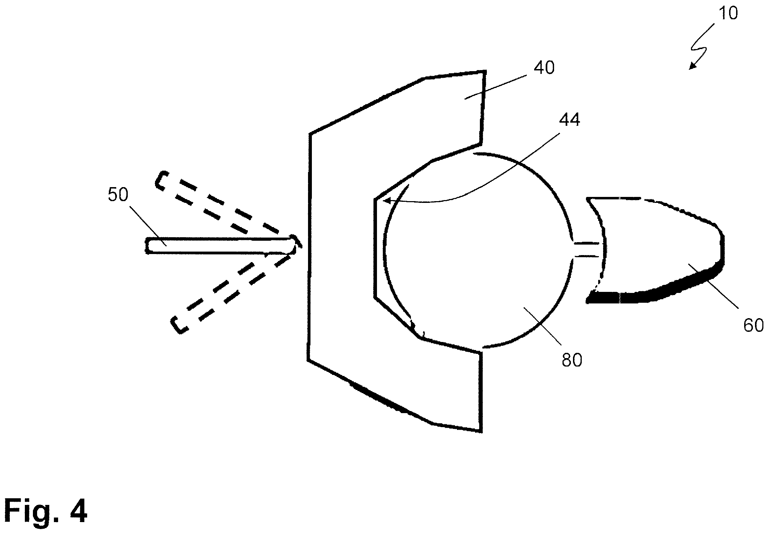

**Fig. 4** zeigt eine schematische Darstellung eines Luftausströmers 10 einer zweiten Ausführungsform. **Fig. 4** zeigt lediglich Komponenten wie ein Bedienelement 60, ein Dekorelement 80, eine erste Lamelle 40 und eine zweite Lamelle 50, wobei für die zweite Lamelle 50 schematisch verschiedene Stellungen durch die gestrichelten Linien dargestellt sind. Die zweite Ausführungsform unterscheidet sich von der ersten Ausführungsform im Wesentlichen darin, dass anstelle eines Luftleitelements 30 ein zylinderförmiges bzw. walzenförmiges Dekorelement 80 vorgesehen ist. Das Dekorelement 80 kann zusätzlich verdreht werden, wobei über eine Kopplung mit der zweiten Lamelle 50 in Abhängigkeit des Verschwenkens des Dekorelements 80 über das Bedienelement 60 ein gegensinniges Verschwenken der zweiten Lamelle 50 erreicht wird, um eine intuitive Benutzung zugewährleisten.

Ein weiterer Unterschied zwischen der ersten Ausführungsform und der zweiten Ausführungsform besteht darin, dass die ersten Lamellen 40 eine Aussparung 44 aufweisen. Die Aussparung 44 ermöglicht, dass die seitliche Luftablenkung über die ersten Lamellen 40 weiter verbessert wird, da sich der obere Bereich und der untere Bereich der Lamellen 40 weiter in Richtung der Luftaustrittsöffnung 18 erstrecken. In weiteren nicht gezeigten Ausführungsformen können die oberen und unteren Bereiche der ersten Lamellen 40 auch noch weiter in Richtung der Luftaustrittsöffnung 18 ragen.

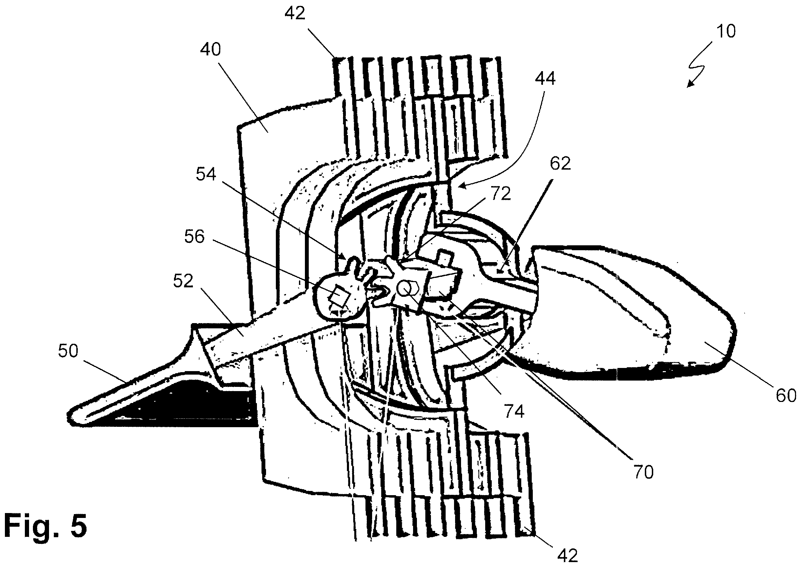

**Fig. 5** zeigt eine perspektivische Darstellung von Komponenten eines Luftausströmers 10 einer dritten Ausführungsform.

Wie bereits für die zweite Ausführungsform gezeigt, weisen die ersten Lamellen 40 eine Aussparung 44 auf. Das Dekorelement 80 ist in **Fig. 5** nicht dargestellt, um die innenliegenden Bauteile darzustellen. Das Dekorelement 80 ist ebenfalls als Walze ausgebildet, wie bereits für die zweite Ausführungsform (siehe **Fig. 4****)** gezeigt. Im Inneren des Dekorelements 80 ist ein Greifer 62 des Bedienelementes 60 aufgenommen. Das Bedienelement 60 ist über eine Aussparung im Dekorelement 80 von außen zugänglich und kann durch eine Verlagerung nach oben und unten sowohl ein Verschwenken bzw. Verdrehen des Dekorelements 80 sowie der zweiten Lamelle 50 bewirken. Das Bedienelement 60 kann ein Verschwenken der ersten Lamellen 40 hervorrufen, wozu das Bedienelement 60 entlang der Längsachse des Dekorelements 80 verschiebbar auf einer Welle 70 gelagert ist.

Der Greifer 62 ist so ausgebildet, dass dieser entlang der Welle 70 verschoben werden kann. Hierzu weisen die Welle 70 und der Greifer 62 Führungsmittel auf, die ein Verschieben des Greifers 62 entlang der Längsachse der Welle 70 ermöglichen. Ein Verdrehen des Greifers 62 um die Welle 70 ist daher nicht möglich. Welle 70 und Greifer 62 werden stets gemeinsam um die Schwenkachse der Welle 70 verschwenkt.

Die Welle 70 weist an mindestens einem Endabschnitt einen Zahnradabschnitt 72 auf. Der Zahnradabschnitt 72 steht mit einem Zahnradabschnitt 54 in Eingriff. Der Zahnradabschnitt 54 befindet sich an einem Ende eines Hebels 52. Der Hebel 52 ist mit der zweiten Lamelle 50 verbunden.

Die Welle 70 ist über Lagerzapfen 74, die sich an den gegenüberliegenden Enden der Welle 70 befinden, in den gegenüberliegenden Seitenwänden des Gehäuses 12 verschwenkbar gelagert. Die zweite Lamelle 50 ist über den Lagerzapfen 56 ebenfalls verschwenkbar in den gegenüberliegenden Seitenwänden des Gehäuses gelagert. Wird das Bedienelement 60 beispielsweise nach oben und unten verschwenkt, so erfolgt über eine Kopplung mit der zweiten Lamelle 50 über die Zahnradabschnitte 54 und 72 ein entgegensinniges Verschwenken. Hierüber kann die einströmende Luft in einen oberen Bereich und einen unteren Bereich der ersten Lamellen 40 geleitet werden. Zusätzlich kann das Bedienelement 60 entlang der Welle 70 verschoben werden, wobei ein Verschwenken der ersten Lamellen 40 auftritt. Die ersten Lamellen 40 sind miteinander über eine Koppeleinrichtung bewegungsmäßig gekoppelt.

Der Greifer 62 weist zusätzlich eine in **Fig. 5** nicht dargestellte gabelförmigen Anbindung an einen Bügel auf, der mit einer Steuerlamelle 40 einer Gruppe von ersten Lamellen 40 verbunden ist. Wird der Greifer 62 verschoben, so bewirkt dies ein Verschwenken der Steuerlamelle 40 und über die Kopplung untereinander auch ein Verschwenken der anderen ersten Lamellen 40.

Anstelle der in **Fig. 5** gezeigten Kopplung des Bedienelementes 60 über die Zahnradabschnitte 54 und 72 kann auch eine andere Kopplung zwischen einem Dekorelement 80 und einer zweiten Lamelle 50 vorgesehen sein. Im Weiteren kann auch die Kopplung mit den ersten Lamellen 40 anderweitig erfolgen.

In den gezeigten Ausführungen sind die Luftleitelemente 30 und die Dekorelemente 80 stets verschwenkbar im Gehäuse 12 gelagert. In weiteren, nicht dargestellten Ausführungsformen, können Dekorelemente 80 aber auch starr im Gehäuse 12 angeordnet sein. Darüber hinaus können die Luftausströmer 10 Beleuchtungseinrichtungen aufweisen, die eine Illuminierung von Komponenten oder Bereichen des Luftausströmers 10 bereitstellen.

Anders als in den **Fig. 1 bis 3** gezeigt, kann auch das Luftleitelement 30 ein Bedienelement aufweisen, das an dem der Luftaustrittsöffnung 18 zugewandten Abschnitt des Luftleitelementes 30 verschiebbar angeordnet ist. Ein Verschieben eines solchen Bedienelementes bewirkt dabei ein Verschwenken der ersten Lamellen 40. Wird das Bedienelement nach oben und unten bewegt, so erfolgt ein Verschwenken des Luftleitelementes 30 und über die Kopplung mit der zweiten Lamelle 50 ein entgegengesetztes Verschwenken dieser.

### Bezugszeichenliste

- 10: Luftausströmer
- 12: Gehäuse
- 14: Wandabschnitt
- 16: Lufteintrittsöffnung
- 18: Luftaustrittsöffnung
- 20: Luftkanal
- 30: Luftleitelement
- 40: erste Lamelle
- 42: Lagerzapfen
- 44: Aussparung
- 50: zweite Lamelle
- 52: Hebel
- 54: Zahnradabschnitt
- 56: Lagerzapfen
- 60: Bedienelement
- 62: Greifer
- 70: Welle
- 72: Zahnradabschnitt
- 74: Lagerzapfen
- 80: Dekorelement

- S: Schwenkachse

## Patentansprüche

1. Luftausströmer (10), aufweisend ein Gehäuse (12) mit einem Luftkanal (20), in dem ein Dekorelement (80), mindestens eine erste Lamelle (40) und mindestens eine zweite Lamelle (50) angeordnet sind, wobei
- das Dekorelement (80) in einem einer Luftaustrittsöffnung (18) zugewandten Abschnitt des Luftkanals (20) angeordnet ist,
- die mindestens eine erste Lamelle (40) in Luftströmungsrichtung dem Dekorelement (80) vorgelagert im Luftkanal (20) angeordnet ist,
- die mindestens eine zweite Lamelle (50) in Luftströmungsrichtung der mindestens einen ersten Lamelle (40) vorgelagert in einem, einer Lufteintrittsöffnung (16) zugewandten Abschnitt des Luftkanals (20) angeordnet ist,
- die mindestens eine erste Lamelle (40) und die mindestens eine zweite Lamelle (50) verschwenkbar am und/oder im Gehäuse (12) gelagert sind,
- mittels der mindestens einen zweiten Lamelle (50) die Menge an zugeführter Luft in einen ersten Bereich und einen zweiten Bereich der mindestens einen ersten Lamelle (40) regelbar ist,
- die mindestens eine erste Lamelle (40) im Wesentlichen orthogonal zur Schwenkachse der mindestens einen zweiten Lamelle (50) und im Wesentlichen orthogonal zur Längsachse des Dekorelements (80) verschwenkbar gelagert ist,
- das Dekorelement (80) und die mindestens eine erste Lamelle (40) in einem ersten Abschnitt des Luftkanals (20) und die mindestens eine zweite Lamelle (50) in einem zweiten Abschnitt des Luftkanals (20) angeordnet sind, wobei der erste Abschnitt dem Dekorelement (80) gegenüberliegende gekrümmte Wandabschnitte (14) und der zweite Abschnitt einen gegenüber dem ersten Abschnitt geringeren Strömungsquerschnitt aufweist, und
- der gesamte Strömungsquerschnitt des Luftkanals (20) über die mindestens eine zweite Lamelle (50) verändert werden kann, **dadurch gekennzeichnet, dass**
- der Strömungsquerschnitt in einer Neutralstellung der mindestens einen zweiten Lamelle (50) im ersten Abschnitt dem Strömungsquerschnitt im zweiten Abschnitt entspricht, und
- die mindestens eine erste Lamelle (40) in einem Abschnitt angeordnet ist, der sich im Übergang von dem ersten Abschnitt zu dem zweiten Abschnitt befindet.

2. Luftausströmer (10) nach Anspruch 1, wobei das Gehäuse (12) im Bereich der Luftaustrittsöffnung (18) abgerundete Luftaustrittskanten aufweist.

3. Luftausströmer (10) nach Anspruch 1 oder 2, wobei das Dekorelement (80) an seinem der Lufteintrittsöffnung (16) und/oder an seinem der Luftaustrittsöffnung (18) zugewandten Ende derart gekrümmt ausgebildet ist, dass unter Ausnutzung des Coanda-Effekts eine Luftstromaufweitung erreichbar ist und die Luftablenkung unterstützt wird.

4. Luftausströmer (10) nach einem der Ansprüche 1 bis 3, wobei das Dekorelement als Luftleitelement (30) ausgebildet und in Luftströmungsrichtung verschiebbar gelagert ist.

5. Luftausströmer (10) nach einem der Ansprüche 1 bis 3, wobei das Dekorelement als Luftleitelement (30) ausgebildet und verschwenkbar im Gehäuse (12) gelagert ist, so dass der Strömungsquerschnitt zwischen dem Luftleitelement (30) und gegenüberliegenden Wandabschnitten (14) des Luftkanals (20) durch ein Verschwenken des Luftleitelements (30) veränderbar ist.

6. Luftausströmer (10) nach einem der Ansprüche 1 bis 5, wobei das Dekorelement (80) eine Querschnittform mit gekrümmten Abschnitten aufweist, die so ausgebildet sind, dass eine dauerhafte Luftstromaufweitung erreichbar ist.

7. Luftausströmer (10) nach einem der Ansprüche 1 bis 6, aufweisend ein Bedienelement (60), das an und/oder in dem Dekorelement (80) beweglich gelagert und mit der mindestens einen ersten Lamelle (40) und/oder der mindestens einen zweiten Lamelle (50) gekoppelt ist.

8. Luftausströmer (10) nach einem der Ansprüche 1 bis 7, aufweisend mehrere erste Lamellen (40), wobei die mindestens eine zweite Lamelle (50) mehrere Koppelabschnitte aufweist, über welche die ersten Lamellen (40) mit der mindestens einen zweiten Lamelle (50) verbunden sind.

9. Luftausströmer (10) nach einem der Ansprüche 1 bis 8, aufweisend mehrere erste Lamellen (40), wobei die ersten Lamellen (40) an ihrer der Luftaustrittsöffnung (18) zugewandten Vorderseite eine Aussparung (44) aufweisen und das Dekorelement (80) rückseitig mindestens abschnittsweise umgeben.

## Claims

1. An air vent (10),
having a housing (12) with an
air duct (20) in which a decorative element (80), at least one first blade (40) and at least one second blade (50) are arranged, wherein
- the decorative element (80) is arranged in a section of the air duct (20) facing an air outlet opening (18),
- the at least one first blade (40) is arranged upstream from the decorative element (80) in the air duct (20) in the direction of air flow, the at least one second blade (50) is arranged upstream from the at least one first blade (40) in the direction of air flow in a section of the air duct (20) facing an air inlet opening (16),
- the at least one first blade (40) and the at least one second blade (50) are mounted in a pivotable manner on and/or in the housing (12),
- the volume of air supplied into a first area and a second area of the at least one first blade (40) can be regulated by means of the at least one second blade (50),
- the at least one first blade (40) is mounted essentially orthogonally to the pivot axis of the at least one second blade (50) and
mounted essentially orthogonally to the longitudinal axis of the decorative element (80),
- the decorative element (80) and the at least one first blade (40) are arranged in a first section of the air duct (20), and the at least one second blade (50) is arranged in a second section of the air duct (20), the first section having curved wall sections (14) positioned opposite the decorative element (80) and the second section having a smaller flow cross-section than the first section, and
- the entire flow cross-section of the air duct (20) can be modified via the at least one second blade (50),
**characterised in that**
- the flow cross-section in a neutral position of the at least one second blade (50) in the first section corresponds to the flow cross-section in the second section, and
- the at least one first blade (40) is arranged in a section which is located in the transition from the first section to the second section.

2. An air vent (10) according to claim 1, wherein the housing (12) has rounded air outlet edges in the area of the air outlet opening (18).

3. An air vent (10) according to claim 1 or 2, wherein the decorative element (80) at its end facing the air inlet opening (16) and/or at its end facing the air outlet opening (18) is formed in a curved manner such that an air flow expansion can be achieved by utilising the Coanda effect and the air deflection is supported.

4. An air vent (10) according to one of claims 1 to 3, wherein the decorative element is designed as an air control element (30) and is mounted so as to be adjustable in the direction of air flow.

5. An air vent (10) according to one of claims 1 to 3, wherein the decorative element is designed as an air control element (30) and is mounted in a pivotable manner in the housing (12) so that the flow cross-section between the air control element (30) and opposite wall sections (14) of the air duct (20) can be modified by pivoting the air control element (30).

6. An air vent (10) according to one of claims 1 to 5, wherein the decorative element (80) has a cross-sectional shape with curved sections designed in such a way that a sustained expansion of the air flow can be achieved.

7. An air vent(10) according to one of claims 1 to 6, having an operating element (60) which is movably mounted on and/or in the decorative element (80) and is coupled with the at least one first blade (40) and/or the at least one second blade (50).

8. An air vent (10) according to one of claims 1 to 7, having a plurality of first blades (40), wherein the at least one second blade (50) has a plurality of coupling sections by which means the first blades (40) are connected to the at least one second blade (50).

9. An air vent (10) according to one of claims 1 to 8, having a plurality of first blades (40), wherein the first blades (40) have a recess (44) on their front side facing the air outlet opening (18) and at least in sections surround the decorative element (80) on the rear side.

## Revendications

1. Dispositif d'écoulement d'air (10, présentant un boîtier (12) avec un conduit d'air (20), dans lequel sont disposés un élément décoratif (80), au moins une première lamelle (40) et au moins une deuxième lamelle (50), où
- l'élément décoratif (80) est disposé dans une section du conduit d'air (20) orientée vers un orifice de sortie d'air (18),
- la au moins première lamelle (40) est disposée en amont de l'élément décoratif (80) dans le conduit d'air (20) dans le sens de l'écoulement de l'air,
- la au moins deuxième lamelle (50) est disposée en amont de la au moins première lamelle (40) dans le sens de l'écoulement de l'air, dans une section du conduit d'air (20) tournée vers un orifice d'entrée d'air (16),
- la au moins première lamelle (40) et la au moins deuxième lamelle (50) sont disposées de manière à pouvoir pivoter sur et/ou dans le boîtier (12),
- au moyen de la au moins deuxième lamelle (50), la quantité d'air amenée peut être réglée dans une première zone et une deuxième zone de la au moins une première lamelle (40),
- la au moins première lamelle (40) est montée de manière à pouvoir pivoter essentiellement
orthogonalement à l'axe de pivotement de la au moins deuxième lamelle (50) et
essentiellement orthogonalement à l'axe longitudinal de l'élément décoratif (80),
- l'élément décoratif (80) et la au moins première lamelle (40) sont disposés dans une première section du conduit d'air (20) et la au moins deuxième lamelle (50) est disposée dans une deuxième section du conduit d'air (20), où la première section présente des sections de paroi (14) courbes faisant face à l'élément décoratif (80) et la deuxième section présente une section transversale d'écoulement réduite par rapport à la première section, et
- la section transversale d'écoulement totale du conduit d'air (20) peut être modifiée au moyen de la au moins deuxième lamelle (50), **caractérisé en ce que**
- la section transversale d'écoulement dans une position neutre de la au moins deuxième lamelle (50) dans la première section correspond à la section transversale d'écoulement dans la deuxième section, et
- la au moins première lamelle (40) est disposée dans une section qui se trouve dans la transition de la première section à la deuxième section.

2. Dispositif d'écoulement d'air (10)
selon la revendication 1, où
le boîtier (12) présente une sortie d'air aux bords arrondis dans la zone de l'orifice de sortie d'air (18).

3. Dispositif d'écoulement d'air (10)
selon la revendication 1 ou 2, où
l'élément décoratif (80) est conçu avec une courbure à son extrémité tournée vers l'orifice d'entrée d'air (16) et/ou à son extrémité tournée vers l'orifice de sortie d'air (18) de telle sorte
qu'un élargissement de l'écoulement d'air peut être obtenu en utilisant l'effet Coanda et que la déviation de l'air est assistée.

4. Dispositif d'écoulement d'air (10)
selon l'une des revendications 1 à 3, où
l'élément décoratif est conçu comme un élément de guidage d'air (30) et est monté de manière à pouvoir être déplacé dans la direction d'écoulement de l'air.

5. Dispositif d'écoulement d'air (10)
selon l'une des revendications 1 à 3, où
l'élément décoratif est conçu comme un élément de guidage d'air (30) et est monté de manière à pouvoir pivoter dans le boîtier (12), de sorte que la section transversale d'écoulement entre l'élément de guidage d'air (30) et des sections de paroi (14) opposées du conduit d'air (20) peut être modifiée par un pivotement de l'élément de guidage d'air (30).

6. Dispositif d'écoulement d'air
selon l'une des revendications 1 à 5, où
l'élément décoratif (80) présente une forme de section transversale avec des sections courbes qui sont conçues de sorte qu'il est possible d'obtenir un élargissement durable de l'écoulement d'air.

7. Dispositif d'écoulement d'air (10)
selon l'une des revendications 1 à 6,
présentant un élément de commande (60) qui est logé de manière mobile sur et/ou dans l'élément décoratif (80) et qui est couplé à la au moins première lamelle (40) et/ou à la au moins deuxième lamelle (50).

8. Dispositif d'écoulement d'air (10)
selon l'une des revendications 1 à 7,
présentant plusieurs premières lamelles (40), où la au moins deuxième lamelle (50) présente plusieurs sections de couplage par lesquelles les premières lamelles (40) sont reliées à la au moins deuxième lamelle (50).

9. Dispositif d'écoulement d'air (10)
selon l'une des revendications 1 à 8,
présentant plusieurs premières lamelles (40), sachant que les premières lamelles (40) présentent une encoche (44) sur leur face avant tournée vers l'orifice de sortie d'air (18) et entourent, au moins en partie, l'élément décoratif (80) sur la face arrière.
